# EUROPÄISCHE PATENTSCHRIFT

(11) **EP 1 695 621 B1**
(45) Veröffentlichungstag und Bekanntmachung des Hinweises auf die Patenterteilung: **14.04.2010**
(21) Anmeldenummer: 06003303.2
(22) Anmeldetag: 17.02.2006
(51) Int. Cl.: A01N 25/02, A01N 51/00, A01N 25/10, A01N 25/30, A01N 25/04

(54) **Agrochemische Formulierung von Pflanzenschutzwirkstoffen zur Verbesserung ihrer Wirkung und Pflanzenverträglichkeit**
Agrochemical formulation of plant protective agents for increasing their activity and plant tolerance
Formulation agrochimique contenant des agents phytosanitaires pour ameliorer leur activité et la tolerance des plantes

(30) Priorität: 26.02.2005 DE 102005008949
(43) Veröffentlichungstag der Anmeldung: 30.08.2006
(73) Patentinhaber: Bayer CropScience AG, 40789 Monheim (DE)
(72) Erfinder: Davies, Lorna Elizabeth, 40489 Düsseldorf (DE); Thielert, Wolfgang, 51519 Odenthal (DE); Thomzik, Jürgen, 40764 Langenfeld (DE); Hungenberg, Heike, 40764 Langenfeld (DE); Baur, Peter, 86938 Schondorf (DE); Giebner, Roland, 40789 Monheim (DE); Jörges, Karin, 51519 Odenthal (DE)

(56) Entgegenhaltungen:
- EP-A- 0 189 588
- EP-A- 1 625 791
- EP-A2- 1 023 833
- WO-A-01/26461
- WO-A-01/43547
- WO-A-02/17722
- WO-A-96/17520
- WO-A-98/16102
- WO-A-99/39581
- WO-A-02/078441
- WO-A-02/091828
- WO-A-02/098230
- WO-A-2005/002334
- PATENT ABSTRACTS OF JAPAN Bd. 2000, Nr. 02, 29. Februar 2000 (2000-02-29) & JP 11 322516 A (CHUGAI PHARMACEUT CO LTD), 24. November 1999 (1999-11-24)
- PATENT ABSTRACTS OF JAPAN Bd. 1997, Nr. 05, 30. Mai 1997 (1997-05-30) & JP 09 002904 A (CHUGAI PHARMACEUT CO LTD), 7. Januar 1997 (1997-01-07)
- DATABASE WPI Week 200354 Derwent Publications Ltd., London, GB; AN 2003-572654 XP002412445 & JP 2003 089603 A (KUMIAI CHEM IND CO LTD) 28. März 2003 (2003-03-28)

## Beschreibung

Die vorliegende Erfindung betrifft neue agrochemische Formulierungen des insektiziden Wirkstoffs Imidacloprid für die Behandlung von Pflanzen, ein Verfahren zur Herstellung dieser Formulierungen und deren Verwendung zur Behandlung von Pflanzen und/oder deren Lebensraum.

Es sind bereits agrochemische Formulierungen bekannt, die Imidacloprid in Form eines Wasserlöslichen Konzentrats ("Soluble Concentrate", "Soluble Liquid", SL) zur Verfügung stellen, so z.B. Confidor® SL 200 (Bayer CropScience AG, Monheim, Deutschland). Diese so genannten SL-Formulierungen enthalten z.B. Emulgatoren und/oder Dispergiermittel, Lösungsmittel und zusätzlich das Cosolvens N-Methylpyrrolidon (NMP). Die Wirksamkeit dieser agrochemischen Wirkstoffformulierungen ist im Allgemeinen sehr gut. Aus Sicht der Umwelteigenschaften besteht aufgrund sich verschärfender regulatorischer Erfordernisse für die Zulassung von agrochemische Formulierungen konstanter Verbesserungsbedarf.

Außerdem sind aus WO 02/091828 Emulsionskonzentrate insbesondere von wasserunlöslichen Strobilurin-Fungiziden bekannt, die nicht zum Auskristallisieren des Wirkstoffes neigen, und neben Emulgator, Dispergiermittel, z.B. ein Copolymer von Polyvinylpyrrolidon und Polyvinylacetat, und einem wasserunlöslichen organischen Lösungsmittel, auch ein wasserunlösliches polares Lösungsmittel, wie z.B. N-Octyl-pyrrolidon oder Propylencarbonat enthalten.

Aus WO 96/17520 sind dermal applizierbare Formulierungen bekannt, die ein insektizides Neonicotinoid, wie z.B. Imidacloprid, in einem Lösungsmittelgemisch, bestehend aus Benzylalkohol, oder gegebenenfalls substituierten Pyrrolidonen und einem weiteren Lösungsmittel, wie z.B. Propylenecarbonat, sowie gegebenenfalls weitere Hilfsstoffe enthalten.

WO 02/098230 offenbart Formulierungen enthaltend Fettalkoholethoxylate als Penetrationsförderer für Neonicotinoide, wie z.B. Imidacloprid, wobei diese Penetrationsförderer in einer bestimmten Konzentration und einem bestimmten Mengenverhältnis zum Neonicotinoid eingesetzt werden.

WO 02/17722 offenbart stabile in Wasser emulgierbare Konzentrate von Organophosphor-Pestiziden, welche ein organisches Carbonat, wie z.B. Propylencarbonat sowie gegebenenfalls ein Co-Solvens, wie z.B. Dimethylsulfoxiol, enthalten.

Darüber hinaus sind mehrere mit Wasser verdünnbare Formulierungen von Pflanzenschutzwirkstoffen, die als umweltverträgliches Lösungsmittel Propylencarbonat, weitere Lösungsmittel, Tenside und andere Hilfsstoffe enthalten, beschrieben worden (vgl. WO 02/078441, WO 01/26461, EP-A 0 189 588, WO 98/16102, JP-A 11-322516, WO 99/39581 und JP-A 09-002904).

Im Rahmen der Suche nach neuen agrochemischen Hilfsmitteln, die die Umwelteigenschaften solcher Formulierungen verbessern, wurden Alternativen zum Lösungsmittel NMP (N-Methylpyrrolidon) untersucht. Die Qualität der Formulierungen soll durch den Ersatz des NMP jedoch nicht beeinträchtigt werden. So soll weiterhin eine möglichst geringe Menge des Pflanzenschutzwirkstoffes selbst ausgebracht werden können, und die Wirkung des Pflanzenschutzmittels soll nicht vermindert sein. Gleichzeitig soll die gute Anwendbarkeit der Formulierungen auf dem Feld z.B. mittels üblicher Maschinen gewährleistet bleiben.

Es wurden nun neue agrochemische SL-Formulierungen hergestellt, die eine deutlich verbesserte Aufnahme des formulierten Wirkstoffs bzw. der formulierten Wirkstoffkombinationen über das Blatt ermöglichen und eine in der Folge deutlich verbesserte biologische Wirkung zeigen.

Ebenfalls weisen die erfindungsgemäßen NMP-freien Formulierungen verbesserte Umwelteigenschaften auf, weil sie das Lösungsmittel NMP durch eine besser verträgliches Co-Solvens ersetzen.

Diese erfindungsgemäßen NMP-freien Formulierungen enthalten neben dem bzw. den jeweiligen Pflanzenschutzwirkstoffen zumindest einen Emulgator, gegebenenfalls zumindest ein Dispergiermittel, zumindest ein Lösemittel und, anstelle des Cosolvens NMP, Propylencarbonat.

Die Konzentration der einzelnen Komponenten kann in den erfindungsgemäßen Formulierungen innerhalb eines größeren Bereiches variiert werden.

So liegt in den Propylencarbonat-haltigen erfindungsgemäßen Formulierungen der Gehalt an Pflanzenschutzwirkstoff bzw. Pflanzenschutzwirkstoffkombination zwischen 0,1 und 40 Gew.-%, vorzugsweise zwischen 5 und 25 Gew.-%, der Gehalt an Emulgator zwischen 0,5 und 30 Gew.-%, vorzugsweise zwischen 0,5 und 15 Gew.-%, der Gehalt an Dispergiermittel im Allgemeinen zwischen 0 und 10 Gew.-%, vorzugsweise zwischen 0,5 und 2 Gew.-%, der Gehalt an Lösemittel im Allgemeinen zwischen 30 und 90 Gew.-%, vorzugsweise zwischen 50 und 70 Gew.-%, und der Gehalt an Propylencarbonat im Allgemeinen zwischen 10 und 50 Gew.-%, vorzugsweise zwischen 15 und 25 Gew.-%. Die Summe der einzelnen Komponenten und möglicher weiterer Bestandteile der Formulierung summieren sich immer auf 100%.

Die Komponenten der Propylencarbonat-enthaltenden erfindungsgemäßen Formulierung sind zumindest in den folgenden Mengen und Formen enthalten (soweit nicht anders angegeben, handelt es sich bei allen Angaben um Gewichtsprozent):
a) Pflanzenschutzwirkstoff: 0,1 - 40 Gew.-% an Imidacloprid
b) Emulgator: 0,5 -30 Gew.-%
c) Dispergiermittel: 0-10 Gew.-%
d) Lösungsmittel: 30 - 90 Gew.-% an Dimethylsulfoxid
e) Propylencarbonat: 10-50 Gew.-%.

Die einzelnen für eine Formulierung von Pflanzenschutzwirkstoffen zu verwendenden Bestandteile sind dem Fachmann im Allgemeinen bekannt und sind kommerziell erhältlich.

Die erfindungsgemäße Formulierung eignet sich zur Formulierung des insektiziden Wirkstoffs Imidacloprid. Imidacloprid (CAS RN 138261-41-3) ist bekannt aus EP-A1 0 192 060 aus der Klasse der Neonicotinoide.

Die erfindungsgemäßen Formulierungen eignen sich in gleicher Weise zur Formulierung von Kombinationen des vorstehend genannten Wirkstoffs Imidacloprid mit weiteren Wirkstoffen, wie z.B. weiteren Insektiziden, Fungiziden, die Pflanzenverträglichkeit verbessernden Wirkstoffen ("Safenern") oder wachstumsfördernden Substanzen etc., sowie von Kombinationen von Imidacloprid mit anderen Neonicotinoiden, wie z.B. Clothianidin, Thiacloprid, Thiamethoxam, Nitenpyram, Acetamiprid und Dinotefuran.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid und/oder Butylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀₋Alkoholen mit Ethylenoxid im Molverhältnis 1:5 bis 1:50, Umsetzungsprodukte von Fettaminen mit Ethylenoxid im Molverhältnis 1:2 bis 1:25, Umsetzungsprodukte von 1 Mol Phenol mit 2 bis 3 Mol Styrol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆-Alkylbenzol-sulfonsäuresalze, wie z.B. Calcium-, Monoethanolammonium-, Di-ethanolammonium- und Tri-ethanolammonium-Salze.

Als Beispiele für nicht-ionische Emulgatoren seien die unter den Bezeichnungen Sapogenat T180( = tri-sec-butylphenol ethoxylate, Fa Clariant), Alkamuls OR36 (= castor oil ethoxylate, Fa Rhodia) und Emulsogen TS54 (= Tristyryl phenol ethoxylate, Clariant) bekannten Produkte genannt. Diese Tristyryl-phenol-ethoxylate (Emulsogen TS54) werden bevorzugt in den erfindungsgemäßen Formulierungen eingesetzt.

Als Beispiele für nicht-ionische Emulgatoren sei weiterhin das unter der Bezeichnung Synperonic T/304 (Sigma Aldrich) bekannte Produkt (Polyoxyethylene, polyoxypropylene block polymer of ethylene diamine) genannt. Dieses wird ebenfalls bevorzugt in den erfindungsgemäßen Formulierungen eingesetzt.

Als Beispiele für anionische Emulgatoren seien das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor FLK und Soprophor 4D 384 (Fa. Rhodia) speziell genannt seien.

Als Dispergiermittel, die in den erfindungsgemäßen Pflanzenbehandlungsmitteln vorhanden sein können, kommen alle üblicherweise für derartige Zwecke in agrochemischen Mitteln einsetzbaren Stoffe in Frage. In den erfindungsgemäßen Formulierungen werden vorzugsweise Copolymere von Polyvinylpyrrolidone und Polyvinylacetat eingesetzt, die in der Regel in einem Verhältnis von 60 zu 40 vorliegen. Ein Beispiel für ein solches Copolymer, das käuflich zu erwerben ist, ist Luvitec VA 64 (BASF). Vinylpyrrolidone-Vinylacetat-Copolymere 60:40 sind zur Herstellung der erfindungsgemäßen Formulierung besonders geeignet.

Als Lösungsmittel ist in den erfindungsgemäßen Pflanzenbehandlungsmitteln Dimethylsulfoxid vorhanden. Dimethylsulfoxid, H₃C-SO-CH₃, hat z.B. ausgesprochen gute Lösemitteleigenschaften und wird häufig für die Herstellung von SL Formulierungen verwendet.

Propylencarbonat (CAS Nr. 108-32-7) ist eine klare, farblose, fast geruchlose Flüssigkeit, die unter den meisten Bedingungen stabil und nicht ätzend ist. Als Lösemittel findet Propylencarbonat bereits in verschiedensten Gegenständen Anwendung, so z.B. in Tinten, Farben, Entfernen von Beschichtungen und Anstrichen, Universalreinigern, Materialien zur Entfettung, Metall- und Maschinenreinigem, Teerentferner. Überraschend zeigte sich im Rahmen der vorliegenden Arbeiten, dass Propylencarbonat sich nicht nur als adäquater Ersatz für NMP eignet, sondern überraschenderweise zusätzlich die Blattpenetration eines erfindungsgemäß formulierten Wirkstoffs alleine aber auch in Tankmischungen mit für solche Mischungen üblichen Zusätzen verbessert. In der vorliegenden Erfindung wird gezeigt, dass Propylencarbonat als Basis für hervorragend wirksame und leicht anwendbare Formulierungen von Pflanzenschutzmitteln genutzt werden kann, die Imidacloprid enthalten.

Als weitere Zusatzstoffe, die in den erfindungsgemäßen Formulierungen enthalten sein können, kommen weitere agrochemische Wirkstoffe sowie Kristallisationsinhibitoren, Netzmittel und auch Wasser in Frage.

Als agrochemische Wirkstoffe kommen vorzugsweise Substanzen mit insektiziden, akariziden und/oder fungiziden Eigenschaften in Betracht.

Beispielhaft genannt seien Cypermethrin, Deltamethrin, Permethrin, natürliches Pyrethrum, Fenpropathrin, Cyfluthrin, β-Cyfluthrin, Methiocarb, Thiodicarb, Aldicarb sowie aus der Gruppe der Ketoenol-Derivate 3-(2,4-Dichlorphenyl)-4-(1,1-dimethyl-propyl-carbonyloxy)-5-spiro-cyclohexyl-3-dihydrofuranon-2, 3-(2,4,6-Trimethylphenyl)-4-(2,2-dimethyl-propyl-carbonyloxy)-5-spiro-cyclopentyl-3-dihydrofuranon-2 und Cis-4-(ethoxycarbonyloxy)-8-methoxy-3-(2,5-xylyl)-1-azaspiro[4.5]dec-3-en-2-on. Als Fungizide kommen vorzugsweise Wirkstoffe aus der Gruppe der Azole, der Strobilurin-Derivate und der Aminosäure-Derivate in Betracht. Beispielhaft genannt seien Tebuconazol, Prothioconazol, Cyproconazol, Triticonazol, Triadimenol, Myclobutanil, Fluoxastrobin, Fluquinconazole, Trifloxystrobin, Azoxystrobin, Kresoxim-methyl, Pyraclostrobin, 3-[1-(2-[4-(2-chlorphenoxy)-5-fluorpyrimid-6-yloxy]-phenyl)-1-(methoximino)-methyl]-5,6-dihydro-1,4,2-dioxazin, Carpropamid und Iprovalicarb.

Als Kristallisationsinhibitoren, die in den erfindungsgemäßen Pflanzenbehandlungsmitteln vorhanden sein können, kommen alle üblicherweise für derartige Zwecke in agrochemischen Mitteln einsetzbaren Stoffe in Frage. Vorzugsweise genannt seien Co-Polymerisate von Polyvinylpyrrolidon und Polyvinylalkohol, wie zum Beispiel das unter der Bezeichnung Luvitec VA 64 (Fa. BASF) bekannte Polyvinylpyrrolidon / Polyvinylalkohol-Copolymerisat, weiterhin Alkylcarbonsäure-dimethylamide, wie Decansäure-dimethylamid oder das unter der Bezeichnung Hallcomid® (Fa. Hall Comp.) bekannte C6-12-Alkancarbonsäure-dimethylamid-Gemische, und außerdem Co-Polymerisate von Ethylendiamin mit Ethylenoxid und Propylenoxid, wie zum Beispiel das unter der Bezeichnung Synperonic T 304 (Fa. Uniqema) bekannte Produkt.

Als Netzmittel kommen alle üblichen für derartige Zwecke in Pflanzenbehandlungsmitteln einsetzbaren Stoffe in Betracht. Vorzugsweise genannt seien Alkylphenolethoxylate, Dialkylsulfosuccinate, wie Dioctylsulfosuccinat-Natrium, Laurylethersulfate und Polyoxyethylensorbitan-Fettsäureester.

Im Allgemeinen geht man bei der Herstellung der erfindungsgemäßen Formulierungen so vor, dass man die flüssigen Komponenten der Formulierung in beliebiger Reihenfolge unter Rühren bei Raumtemperatur miteinander vermischt. Feste Komponenten können in der erhaltenen Mischung gelöst werden (siehe auch Bsp. 1).

Vorzugsweise stellt man die erfindungsgemäßen agrochemischen Formulierungen her, indem man
a) den Wirkstoff bzw. die Wirkstoffe in einem Gemisch aus Dimethylsulfoxid und Propylencarbonat löst,
b) den Emulgator und das Dispergiermittel unter Rühren zugibt, und
c) die Komponenten so lange miteinander verrührt, bis sich eine klare, homogene Lösung gebildet hat.

Für die Herstellung der erfindungsgemäßen Pflanzenbehandlungsmittel kommen übliche Geräte in Betracht, die zur Zubereitung von agrochemischen Formulierungen eingesetzt werden.

Die Aufwandmenge an den erfindungsgemäßen Pflanzenbehandlungsmitteln kann innerhalb eines größeren Bereiches variiert werden. Sie richtet sich nach den jeweils enthaltenen Wirkstoffen und nach deren Konzentration in den Formulierungen.

Es wurde gefunden, dass sich die erfindungsgemäßen agrochemischen Formulierungen sehr gut zur Applikation der enthaltenen Wirkstoffe auf Pflanzen, umfassend Keimlinge, Blätter, Blüten, Stengel/Stamm und den Lebensraum von Pflanzen, also den Boden, aber auch bodenfreie Substrate, eignen.

Die erfindungsgemäßen Formulierungen zeichnen sich insbesondere dadurch aus, dass durch den Einsatz von Propylencarbonat die biologische Wirksamkeit einer Wirkstoffformulierung deutlich erhöht wird (siehe Beispiele 3 bis 5).

Die erfindungsgemäßen Formulierungen enthalten als Wirkstoff das Insektizid Imidacloprid aus der Klasse der Neonicotinoide, sowie Propylencarbonat und die vorstehend genannten Zusatzstoffe.

Besonders vorteilhaft lassen sich die erfindungsgemäßen Formulierungen zur Behandlung von Baumwolle, Citrusfrüchten, Tomaten, Gurken, Zucchini, Auberginen, Melonen, Kohlarten, Kartoffel, Raps, Kernobst, Steinobst, Beerenobst, Reben, Tabak, Mais, Soja, Zuckerrohr, Zierpflanzen sowie Weizen, Gerste, Roggen, Hafer und Triticale verwenden, ferner für Reis, Erbsen, Ackerbohnen, Sonnenblumen und Rüben oder auch von Gemüse verschiedenster Art. Dazu gehören unter anderem Artischocken, Blumenkohl, Broccoli, grüne Bohnen, Fenchel, Chicorée, Kohlrabi, Kopf salat, Kresse, Lauchgemüse, Mangold, Möhren, Paprika, Rhabarber, Rote Beete, Rotkohl, Rosenkohl, Sellerie, Wirsing, Kastanien, Schnittbohnen, Schwarzwurzeln, Spargel, Speiserüben, Spinat, Weißkohl, Zwiebeln.

Die Formulierungen können auch zur Behandlung transgener Pflanzen eingesetzt werden. Dabei können im Zusammenwirken mit den durch Expression gebildeten Substanzen auch synergistische Effekte mit dem formulierten Wirkstoff Imidacloprid auftreten.

Die erfindungsgemäßen Formulierungen sowie die daraus durch weiteres Vermengen mit Formulierhilfsstoffen und/oder Pflanzenbehandlungsmitteln herstellbaren Formulierungen eignen sich hervorragend zur Applikation von agrochemischen Wirkstoffen auf Pflanzen und/oder deren Lebensraum. Sie gewährleisten die Freisetzung der aktiven Komponenten in der jeweils gewünschten Menge über einen längeren Zeitraum.

Gegenstand der vorliegenden Erfindung sind deshalb auch Verfahren zum Schutz von Pflanzen vor Schädlingen, indem man die Pflanzen und/oder ihre Umgebung mit einer erfindungsgemäßen Formulierung behandelt. Die Erfindung bezieht sich ebenfalls auf die Verwendung der erfindungsgemäßen Formulierung zum Schutz von Pflanzen vor Schädlingen.

Zu den oben erwähnten Schädlingen gehören:

Aus der Ordnung der Isopoda z.B. Oniscus asellus, Armadillidium vulgare, Porcellio scaber. Aus der Ordnung der Diplopoda z.B. Blaniulus guttulatus. Aus der Ordnung der Chilopoda z.B. Geophilus carpophagus, Scutigera spp.. Aus der Ordnung der Symphyla z.B. Scutigerella immaculata. Aus der Ordnung der Thysanura z.B. Lepisma saccharina. Aus der Ordnung der Collembola z.B. Onychiurus armatus. Aus der Ordnung der Orthoptera z.B. Acheta domesticus, Gryllotalpa spp., Locusta migratoria migratorioides, Melanoplus spp., Schistocerca gregaria. Aus der Ordnung der Blattaria z.B. Blatta orientalis, Periplaneta americana, Leucophaea maderae, Blattella germanica. Aus der Ordnung der Dermaptera z.B. Forficula auricularia. Aus der Ordnung der Isoptera z.B. Reticulitermes spp.. Aus der Ordnung der Phthiraptera z.B. Pediculus humanus corporis, Haematopinus spp., Linognathus spp., Trichodectes spp., Damalinia spp.. Aus der Ordnung der Thysanoptera z.B. Hercinothrips femoralis, Thrips tabaci, Thrips palmi, Frankliniella occidentalis. Aus der Ordnung der Heteroptera z.B. Eurygaster spp., Dysdercus intermedius, Piesma quadrata, Cimex lectularius, Rhodnius prolixus, Triatoma spp. Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp. Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae. Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus. Aus der Ordnung der Hymenoptera z.B. Diprion spp., Hoplocampa spp., Lasius spp., Monomorium pharaonis, Vespa spp. Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp. Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Im Rahmen der vorliegenden Erfindung kann die erfindungsgemäße Formulierung auf oder in den Boden bzw. alternative Kultursubstrate wie z.B. Torf, Einheitserde, Steinwolle, Nährlösungen, Bewässerungswasser etc., auf die Pflanzen (z.B. Blattapplikation) bzw. Pflanzenteile (z.B. Stammapplikation) oder auch auf das Saatgut der vorstehend genannten Pflanzen bzw. das entsprechende Pflanzgut aufgebracht werden.

Im Allgemeinen muss bei der Behandlung der Pflanzen darauf geachtet werden, dass die Menge des aufgebrachten erfindungsgemäßen Mittels und/oder weiterer Zusatzstoffe so gewählt wird, dass die Pflanze nicht geschädigt wird. Dies ist vor allem bei Wirkstoffen zu beachten, die in bestimmten Aufwandmengen phytotoxische Effekte zeigen können.

Die Aufwandmenge an den erfindungsgemäßen Formulierungen sowie an den daraus durch weiteres Vermengen mit Formulierhilfsmitteln herstellbaren Zubereitungen kann innerhalb eines größeren Bereiches variiert werden. Bei der Behandlung von Pflanzenteilen liegen die Aufwandmengen des Wirkstoffs im Allgemeinen zwischen 0,1 und 10 000 g/ha, vorzugsweise zwischen 10 und 1 000 g/ha.

Die Herstellung und die Verwendung der erfindungsgemäßen Formulierungen wird durch die folgenden Beispiele veranschaulicht.

### Beispiele

### Beispiel 1

### Herstellung einer erfindungsgemäßen Formulierung basierend auf Imidacloprid und Propylencarbonat

Die in der folgenden Tabelle I angegebenen flüssigen Komponenten werden in beliebiger Reihenfolge unter Rühren bei Raumtemperatur miteinander vermischt, bis sich eine homogene Flüssigkeit ergibt. Feste Komponenten werden in der erhaltenen Mischung gelöst.

Man erhält so eine Formulierung der folgenden Zusammensetzung:

**Tabelle I**

| **Gew.-%** | **Komponente** | **Gehalt Wirkstoff in Gramm/Liter** |
|---|---|---|
| 17,1 | Imidacloprid | 200 |
| 2,5 | Tristyrylphenol 54M Ethoxylate (Emulsogen TS54) | |
| 1 | VP/VA-Copolymer (Luvitec VA 64 der Fa. BASF) | |
| 20 | Propylencarbonat S (BASF) | |
| (auf 100 %) | Dimethylsulfoxid (DMSO) | |

### Beispiel 2

### Bestimmung der Bioverfügbarkeit (Penetration der Kutikula) des formulierten Wirkstoffs in Confidor SL200 (NMP-haltig) und einer analogen, erfindungsgemäßen Formulierung (enthaltend Propylencarbonat anstelle von NMP)

Die bekannte Formulierung "Confidor SL200" enthaltend den Wirkstoff Imidacloprid und NMP wurde erfindungsgemäß dahingehend abgeändert, dass NMP durch Propylencarbonat ersetzt wurde (zur Zusammensetzung siehe Beispiel 1). Die beiden Formulierungen wurden miteinander verglichen. Betrachtet wurde die Penetration von Apfelblattkutikein (Tabelle A).

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt. In den Spritzbrühen wurde jeweils CIPAC-Wasser verwendet.

Nach dem Auftragen der Spritzbrühen ließ man jeweils das Wasser verdunsten, drehte dann jeweils die Kammern um und stellte sie in thermostatisierte Wannen. Die einsetzende Penetration fand bei einer relativen Luftfeuchtigkeit von 60 % und einer eingestellten Temperatur von 20°C statt. In regelmäßigen Abständen wurden mit einer Spritze Proben entnommen und mittels HPLC auf den Gehalt an penetriertem Wirkstoff hin untersucht.

Die Versuchsergebnisse gehen aus der folgenden Tabelle hervor.

**Tabelle A**

| **Formulierung** | **Imidacloprid Konzentration (g/l)** | **Penetration^{a}* nach 1 Tag (± SE)** | **Penetration^{a}* nach 2 Tagen (± SE)** | **Penetration^{a}** nach 5 Tagen (± SE)** |
|---|---|---|---|---|
| **Confidor SL200 *(bekannt)*** | 0.2 | 3.8 % (± 0.5) | 6.0 % (± 0.8) | 12.3 % (± 1.5) |
| **Confidor SL200 *(erfindungsgemäß)*** | 0.2 | 5.9 % (± 0.8) | 9.2 % (± 1.0) | 16.9 % (± 1.6) |

| | | | | |
|---|---|---|---|---|
| ^{a} Mittelwerte aus 18-20 Wiederholungen für die Penetration durch Apfelblattkutikeln; | | | | |
| * bei 20°C, 60% Luftfeuchtigkeit; **nach 96 Std. Temperaturerhöhung auf 30°C (bei 60% Luftfeuchtigkeit) | | | | |

Der Einfluss von Additiven (seed oil derivatives) wie z.B. "Trend® 90" (DuPont de Nemours, Bad Homburg) und "Mero® " (Bayer CropScience, Langenfeld) wurde ebenfalls betrachtet (Tabelle B) und die bekannte mit der erfindungsgemäßen Formulierung von Imidacloprid verglichen.

**Tabelle B**

| **Adjuvant** | **Imidacloprid Konzentration (g/l)** | **Additiv Konzentration (g/l)** | **Penetration^{a}* nach 20 Std.** | **Penetration** nach 2 Tagen** |
|---|---|---|---|---|
| **Confidor SL200 *(bekannt)*** | 0.2 | Trend® 90 0.1 | 27 % | 44 % |
| **Confidor SL200 *(erfindungsgemäß)*** | 0.2 | Trend® 90 0.1 | 33 % | 58 % |
| **Confidor SL200 *(bekannt)*** | 0.2 | Mero® 1 | 70 % | 85 % |
| **Confidor SL200 *(erfindungsgemäß)*** | 0.2 | Mero® 1 | 76 % | 96 % |

| | | | | |
|---|---|---|---|---|
| ^{a} Mittelwerte aus 4-6 Wiederholungen für die Penetration durch Apfelblattkutikeln; | | | | |
| * bei 20°C, 60%; **nach 27 Std. Temperaturerhöhung auf 30°C (bei 60%) | | | | |

### Beispiel 3

### Wirkung einer erfindungsgemäßen Formulierung auf Basis von Imidacloprid und Propylencarbonat (zur Zusammensetzung siehe Beispiel 1)

### Myzus persicae -Test

Zur Herstellung einer zweckmäßigen Anwendungslösung vermischt man 1 Gewichtsteil formulierte Ware mit Wasser auf die gewünschte Konzentration.

Chinakohlblattscheiben (*Brassica pekinensis*), die von allen Stadien der Grünen Pfirsichblattlaus *(Myzus persicae)* befallen sind, werden mit einer Anwendungslösung der gewünschten Konzentration gespritzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden.

Bei diesem Test zeigt z. B. die folgende Formulierung des Erfindungsbeispiels überlegene Wirksamkeit gegenüber dem Stand der Technik (Tabelle C):

**Tabelle C**

| **Myzus persicae - Test** | | |
|---|---|---|
| | | |
| Wirkstoff/Produkt | Konzentration in ppm | Abtötung in % nach 5^{d} |
| **Confidor SL 200 Propylencarbonat - haltig** (erfindungsgemäß) | **8** | **33** |
| **Confidor SL 200 NMP - haltig** (bekannt) | **8** | **10** |

### Beispiel 4

### Wirkung einer erfindungsgemäßen Formulierung auf Basis von Imidacloprid und Propylencarbonat (zur Zusammensetzung siehe Beispiel 1)

### Plutella xylostella -Test (normal sensibel)

Zur Herstellung einer zweckmäßigen Anwendungslösung vermischt man 1 Gewichtsteil formulierte Ware mit Wasser auf die gewünschte Konzentration.

Chinakohlblattscheiben (*Brassica pekinensis*) werden mit einer Anwendungslösung der gewünschten Konzentration gespritzt und nach dem Antrocknen des Spritzbelages mit Larven der Kohlmotte *(Plutella xylostella)* besetzt.

Nach der gewünschten Zeit wird die Wirkung in % bestimmt. Dabei bedeutet 100 %, dass alle Raupen abgetötet wurden; 0 % bedeutet, dass keine Raupe abgetötet wurde.

Bei diesem Test zeigt z. B. die folgende Formulierung des Erfindungsbeispiels überlegene Wirksamkeit gegenüber dem Stand der Technik (Tabelle D):

**Tabelle D**

| | | |
|---|---|---|
| **Plutella xylostella - Test (Sensibler Stamm)** | | |
| | | |

| Wirkstoff/Produkt | Konzentration in ppm | Abtötung in % nach 3^{d} |
|---|---|---|
| **Confidor SL 200** | | |
| **Propylencarbonat - haltig** (erfindungsgemäß) | **120** | **93** |
| **Confidor SL 200** | | |
| **NMP - haltig** (bekannt) | **120** | **57** |

### Beispiel 5

### Wirkung einer erfindungsgemäßen Formulierung auf Basis von Imidacloprid und Propylencarbonat (zur Zusammensetzung siehe Beispiel 1)

### Pflanzenverträglichkeit - Sojabohne

Zur Herstellung einer zweckmäßigen Anwendungslösung vermischt man 1 Gewichtsteil formulierte Ware mit Wasser auf die gewünschte Konzentration.

Sojabohnenpflanzen *(Glycine max)* werden mit einer Anwendungslösung der gewünschten Konzentration tropfnass gespritzt.

Nach der gewünschten Zeit wird die Schädigung der Pflanze in % bestimmt. Dabei bedeutet 100 %, dass die ganze Pflanze geschädigt wurde; 0 % bedeutet, dass keine Schäden sichtbar sind.

Bei diesem Test zeigt z. B. die folgende Formulierung des Erfindungsbeispiels überlegene Wirksamkeit gegenüber dem Stand der Technik (Tabelle E):

**Tabelle E**

| **Sojabohne** | | |
|---|---|---|
| Wirkstoff/Produkt | Konzentration in ppm | Schädigung in % nach 7^{d} |
| **Confidor SL 200** | | |
| **Propylencarbonat - haltig** (erfindungsgemäß) | **1000** | **0** |
| **Confidor SL 200** | | |
| **NMP - haltig** (bekannt) | **1000** | **10** |

## Patentansprüche

1. Eine Wirkstoffformulierung zur Verwendung im Pflanzenschutz, umfassend zumindest
a) Imidacloprid zwischen 0,1 und 40 Gew.-%,
b) Emulgator zwischen 0,5 und 30 Gew.-%,
c) Dimethylsulfoxid zwischen 30 und 90 Gew.-%,
d) Propylencarbonat zwischen 10 und 50 Gew.-%, und
e) Dispergiermittel zwischen 0 und 10 Gew.-% liegt,
wobei die Summe der Komponenten a) bis e) und gegebenenfalls weiterer Zusatzstoffe sich auf 100% summiert.

2. Eine Wirkstoffformulierung gemäß Anspruch 1, **dadurch gekennzeichnet, dass** sie als Dispergiermittel ein Copolymer von Polyvinylpyrrolidon und Polyvinylacetat enthält.

3. Ein Verfahren zum Herstellen von Wirkstoffformulierungen gemäß Anspruch 1 oder 2, **dadurch gekennzeichnet, dass** man
a) Imidacloprid in einem Gemisch aus Dimethylsulfoxid und Propylencarbonat löst,
b) einen oder mehrere Emulgatoren und ein oder mehrere Dispergiermittel unter Rühren zugibt, und
c) die Mischung so lange weiterrührt, bis sich eine klare und homogene Lösung gebildet hat.

4. Verwendung einer Wirkstoffformulierung gemäß einem der Ansprüche 1 bis 3 zur Behandlung von Pflanzen.

5. Verfahren zur Erhöhung der Wirksamkeit von Imidacloprid oder seiner Kombination mit anderen Pflanzenschutzwirkstoffen, **dadurch gekennzeichnet, dass** man es in einer Wirkstoffformulierung gemäß einem der Ansprüche 1 bis 3 formuliert.

6. Verfahren zum Schutz von Pflanzen vor Schädlingen, **dadurch gekennzeichnet, dass** man Pflanzen und/oder ihren Lebensraum mit einer Wirkstoffformulierung gemäß einem der Ansprüche 1 bis 3 behandelt.

## Claims

1. Active compound formulation for use in crop protection, comprising at least
a) imidacloprid from 0.1 to 40% by weight,
b) emulsifier from 0.5 to 30% by weight,
c) dimethyl sulphoxide from 30 to 90% by weight,
d) propylene carbonate from 10 to 50% by weight, and
e) dispersant from 0 to 10% by weight,
where the sum of the components a) to e) and, if appropriate, further additives is 100%.

2. Active compound formulation according to Claim 1, **characterized in that** it comprises, as dispersant, a copolymer of polyvinylpyrrolidone and polyvinyl acetate.

3. Process for preparing active compound formulations according to Claim 1 or 2, **characterized in that**
a) imidacloprid is dissolved in a mixture of dimethyl sulphoxide and propylene carbonate,
b) one or more emulsifiers and one or more dispersants are added with stirring, and
c) the mixture is stirred until a clear and homogeneous solution has been formed.

4. Use of an active compound formulation according to any of Claims 1 to 3 for treating plants.

5. Method for increasing the efficacy of imidacloprid or a combination thereof with other crop protection agents, **characterized in that** it is formulated in an active compound formulation according to any of Claims 1 to 3.

6. Method for protecting plants against pests, **characterized in that** plants and/or their habitat are treated with an active compound formulation according to any of Claims 1 to 3.

## Revendications

1. Formulation de principe actif pour utilisation dans la protection des plantes, comprenant au moins
a) de l'imidaclopride entre 0,1 et 40 % en poids,
b) un émulsifiant entre 0,5 et 30 % en poids,
c) du diméthylsulfoxyde entre 30 et 90 % en poids,
d) du carbonate de propylène entre 10 et 50 % en poids et
e) un dispersif entre 0 et 10 % en poids,
la somme des composants a) à e) et éventuellement d'autres additifs se montant à 100 %.

2. Formulation de principe actif selon la revendication 1, **caractérisée en ce qu'**elle contient comme dispersif un copolymère de polyvinylpyrrolidone et de poly(acétate de vinyle).

3. Procédé de préparation de formulations de principe actif selon la revendication 1 ou 2, **caractérisé en ce que**
a) on dissout l'imidaclopride dans un mélange de diméthylsulfoxyde et de carbonate de propylène,
b) on ajoute un ou plusieurs émulsifiants et un ou plusieurs dispersifs tout en agitant et
c) on poursuit l'agitation du mélange jusqu'à formation d'une solution claire et homogène.

4. Utilisation d'une formulation de principe actif selon l'une des revendications 1 à 3 pour le traitement de plantes.

5. Procédé d'augmentation de l'efficacité de l'imidaclopride ou de sa combinaison avec d'autres principes actifs phytosanitaires, **caractérisé en ce qu'**on le formule dans une formulation de principe actif selon l'une des revendications 1 à 3.

6. Procédé de protection de plantes contre les nuisibles, **caractérisé en ce que** l'on traite les plantes et/ou leur environnement avec une formulation de principe actif selon l'une des revendications 1 à 3.
